# EUROPEAN PATENT APPLICATION

(11) **EP 0 630 735 A2**
(43) Date of publication of application: **28.12.1994**
(21) Application number: 94107464.3
(22) Date of filing: 13.05.1994
(51) Int. Cl.: B29C 47/04, B29C 47/30, B29C 67/14, B29B 15/10, D02G 3/04

(54) **Reinforcing composite items with composite thermoplastic staple fibers**

(30) Priority: 25.05.1993 US 67444
(71) Applicant: BASF CORPORATION, Parsippany, New Jersey 07054 (US)
(72) Inventor: Kent, George M., Arden, NC 28704 (US); Ilg, Otto M., Asheville, NC 28803 (US); Hoyt, Matthew B., Arden, NC 28704 (US)
(74) Representative: Langfinger, Klaus-Dieter, Dr.

(57) **Abstract**

Fiber reinforced laminates are made by providing a multicomponent staple fiber yarn having a fibrous matrix thermoplastic component with a first melting point if crystalline or a first softening point if not crystalline, and a drawable fibrous reinforcing thermoplastic component with a second melting point if crystalline or a second softening point if not crystalline, wherein the first melting point is at least 5° below the second melting point; fabricating the yarn into a pre-consolidation fabric; shaping the pre-consolidation fabric by conforming the fabric onto a mold or substrate; and heating the shaped pre-consolidation fabric to the first melting or softening point but not to the second melting or softening point such that the matrix component melts and consolidates the reinforcing component.

## Description

This invention relates generally to reinforced composite items and processes for making them. More specifically, this invention relates to reinforced composite articles made substantially from thermoplastic staple fibers.

As used herein, the term "fiber" includes fibers of extreme or indefinite length ("filaments") and fibers of short length ("staple fiber"). The term "fabric" denotes a two, or possibly three, dimensional product built up from fibers. These fibers may occur in the fabric uni-directionally, bi-directionally with different warp and woof ratios or tri-directionally. The term "mixed fiber" or "mixed fibers" refers to yarns composed of two or more different types of fibers. The term "multicomponent fiber" or "multicomponent fibers" refers to fibers having two or more longitudinally coextensive components. The term "multicomponent yarn" or "multicomponent yarns" refers to either mixed fiber yarns, multicomponent fibers, yarns or mixtures of them. The term "multicomponent staple fiber yarn" or "multicomponent staple fiber yarns" refers to yarns made at least partially from staple fiber.

Fiber reinforced products are known. Such products make possible the manufacture of advanced thermoplastic composite parts in very complex shapes. The traditional composites take the form of a thermoplastic matrix reinforced by non-thermoplastic fibers, such as graphite, glass, ceramics and similar fibers. These materials may be found in many "high-tech" applications such as for aircraft components and recreational equipment.

U.S. Patent No. 4,539,249 ("'249") describes laminates of graphite, glass, aramides, ceramics, quartz, boron, SiC, etc., and resinous thermoplastic fibers which are intended for conversion into a composite. To make the pre-consolation form, resinous thermoplastic fibers are combined or blended with the reinforcing fibers to form a single yarn. The blended yarn is then woven into a fabric that is shaped to a suitable form in a mold and then heated to melt the thermoplastic component. Also described is a process for spinning staple resin fibers with graphite to form the yarn which is then woven into the fabric, shaped and heated. Fabrics formed by interweaving the graphite in the resin fibers by conventional weaving techniques are also disclosed.

U.S. Patent Nos. 4,874,563 ("'563"), 4,818,318 ("'318"), and 4,871,491 ("491") describe methods of forming fiber reinforced composites by forming a tape or fabric prepreg especially of carbon fiber tows intermixed with thermoplastic matrix fibers. Also described is a process involving the extrusion of carbon fiber tapes impregnated with high melting thermoplastic polymers. These patents acknowledge that prepregs formed by forming composites from carbon fibers which are coated or painted with thermosetting matrix materials are stiff and can not be draped across intricately shaped molds or are tacky and difficult to handle. These patents disclose attempts to overcome the shortcomings of such former processes by intermixing tows of carbon fibers and thermoplastic polymeric fibers. The processes for such intermixing are disclosed. '318 discloses intermixing two tows where one tow is a thermoplastic matrix material and the other tow is a reinforcing material that is preferably carbon fiber but may be a sufficiently high melting thermoplastic. '491 and '563 also describe intermixing methods.

U.S. Patent Nos. 5,000,807 ("'807") and 5,177,840 ("'840") both disclose additional methods of commingling or combining thermoplastic matrix and, preferably non-thermoplastic, reinforcing fiber tows. The reinforcing fibers may be aromatic polyamides.

Cziollek, J., "New Yarns for Thermoplastic Technical Textiles and Composites", Technische Textilien/Technical Textiles, Vol. 35, October 1992, pp. E106-E107 describes attempts to develop a 100% thermoplastic composite material in which both the reinforcing fiber and the matrix polymer are thermoplastics. This article describes theoretical methods of making such a composite yarn but does not sufficiently describe the matrix polymer or any specific combination of thermoplastic reinforcing fiber with a matrix polymer. The discussion is primarily directed to development of a reinforcing fiber and is not enabling for a complete composite fabric.

U.S. Patent No. 5,190,809 ("'809") discloses a fabric of continuous thermoplastic matrix filaments and continuous reinforcing filaments suited for being processed as a thermoplastic composite prepreg. In one variation of the fabric, both the reinforcing filament and the matrix filament are thermoplastics. Even in the case where both the reinforcing and matrix filaments are thermoplastic, '809 teaches that each type of filament is supplied as a discrete bundle or monofilament.

A problem inherent in combining two or more thermoplastic materials is the incompatibility of the separate materials. For reinforced composite applications, it is essential that the matrix polymer completely coat or "wet out" the reinforcing fiber. Air pockets that remain in the final product seriously reduce its strength. One manner of easing the problem of insufficient wet out is by adding a size, i.e., a wetting agent or water soluble polymer to the matrix polymer to improve the wet out of the reinforcing polymer.

U.S. Patent No. 5,187,018 discloses the use of a compatibilizer to promote wetting of the reinforcing fiber by the matrix thermoplastic. The reinforcing fiber and the compatibilizer may be co-extruded.

The present invention solves the deficiencies described above in the use of a fabric for processing into a fiber reinforced composite. The fabric is made from a multicomponent staple fiber yarn having a thermoplastic matrix component of a first melting point if crystalline or a first softening point if not crystalline and a drawable, fibrous thermoplastic reinforcing component of a second melting point if crystalline or a second softening point if not crystalline. The first melting or softening point is at least 5°C below the second melting or softening point.

Another embodiment of the invention is the use of a fabric for conversion into a fiber reinforced laminate. The fabric is produced by spinning a yarn from a matrix thermoplastic staple fiber with a first melting point if crystalline or a first softening point if not crystalline, and a drawable fibrous reinforcing thermoplastic component with a second melting point if crystalline or a second softening point if not crystalline, wherein the first melting point is at least 5°C below the second melting point; and fabricating the yarn into a fabric.

A further embodiment of the present invention is a process for forming fiber reinforced laminates by providing a multicomponent staple fiber yarn having a fibrous matrix thermoplastic component with a first melting point if crystalline or a first softening point if not crystalline, and a drawable fibrous reinforcing thermoplastic component with a second melting point if crystalline or a second softening point if not crystalline, wherein the first melting point is at least 5°C below the second melting point; fabricating the yarn into a pre-consolidation fabric; shaping the pre-consolidation fabric by conforming the fabric onto a mold or substrate; and heating the shaped pre-consolidation fabric to the first melting or softening point but not to the second melting or softening point such that the matrix component melts and consolidates the reinforcing component.

It is an object of the present invention to provide a predominately thermoplastic reinforced composite material from staple fibers.

Related objects and advantages will be apparent to those of ordinary skill in the art after reading the following detailed description.

To promote an understanding of the principles of the present invention, descriptions of specific embodiments of the invention follow, and specific language describes the same. It will nevertheless be understood that no limitation of the scope of the invention is thereby intended, and that such alterations and further modifications, and such further applications of the principles of the invention as discussed are contemplated, as would normally occur to one ordinarily skilled in the art to which the invention pertains.

The present invention involves the use of multicomponent predominately thermoplastic staple fiber yarns (either mixed staple fiber or multicomponent staple fiber) to prepare fabrics for use in making reinforced composite items. By combining staple fibers, a much more uniform mixing of the reinforcing and matrix components is achieved without complicated process steps, such as those required in commingling. The use of staple fiber yarns places the reinforcing component in intimate contact with the matrix component, which will typically produce much stronger adhesion between the components than found in other methods. The use of staple fiber yarns will allow two normally incompatible polymers to form strong components without the use of compatibilizing agents such as those discussed in U.S. Patent No. 5,187,018.

A first embodiment of the present invention is a fabric suitable for being processed into a fiber reinforced composite article. The fabric is composed of multicomponent staple fiber yarn having one component of thermoplastic matrix polymer and the other component of thermoplastic reinforcing polymer, whereby the reinforcing component is preferably a filament and the matrix component is preferably a staple fiber. The components may be present as a bicomponent staple fiber in any arrangement, e.g., side-by-side or sheath/core or islands-in-the-sea, whereby the matrix components may consist of monocomponent staple fibers. It should be readily apparent that, in the case of bicomponent staple fibers, the matrix component should occupy a large portion of the outer surface of the fibers to facilitate flowing and incorporate the reinforcing component in the melt without significant void formation.

The multicomponent staple fiber yarns useful in the present invention may be made according to any known or later developed method for making such fibers. For example, side-by-side bicomponent tow may be made as shown in U.S. Pat. No. 5,162,074, incorporated herein by reference for such teaching. Sheath/core bicomponent tow may be made as shown in U.S. Pat. No. 5,162,074, incorporated herein by reference for such teaching. The portion of U.S. Patent No. 3,692,423 relating to the manufacture of islands-in-the-sea fibers is hereby incorporated by reference as an example of how such fibers can be made. Where the arrangement is sheath/core, the matrix material occupies the sheath. Where the arrangement is islands-in-the-sea, the matrix material occupies the sea. After making the multicomponent tow, it is cut into staple lengths and then formed into yarn by staple spinning according to known methods for doing so.

The multicomponent fibers may be formed by co-spinning the matrix and reinforcing components. Alternatively, the components may be spun separately and combined in the staple spinning process.

It is contemplated that the multicomponent staple yarns may include other fibers which provide other properties. For example, carbon fibers may provide conductivity and resistance to static electricity. These "functional" filaments may be added during co-spinning or by any other method such as commingling, coweaving, coknitting, cowinding, etc.

The matrix component has a melting point, if crystalline, or a softening point, if not crystalline, that is at least about 5°C, and preferably more, below the melting or softening point of the reinforcing component. This allows the matrix component to melt and become the matrix portion of the composite while the reinforcing component does not melt and remains fibrous after the matrix resolidifies. It should be readily apparent to those who are ordinarily skilled in the art that the greater difference in the melting point the greater flexibility in processing the fabric made from the staple fibers into a composite since the melt temperature must be less tightly controlled.

Suitable materials for the matrix component include virtually any thermoplastic materials so long as the melting point criteria is met. Of course, for application in the present invention, the thermoplastic should be fiber forming. However, this is in principle the case with virtually all thermoplastic materials of the requisite molecular weight, which will vary according to the polymer and its chemical properties. Preference is given to a crystalline or semi-crystalline thermoplastic materials. The matrix component can be selected, for instance, from polyamides (such as nylon 6; nylon 6,6; nylon 6,6T; nylon 616T; nylon 4,6; nylon 8; nylon 6,10; nylon 11; and nylon 12); polyolefins (such as polypropylene, polyethylene, polytetrafluoroethylene and polyphenylene ether); amorphous and/or crystalline polyesters (such as polyalkyleneterephthalates, polyethyleneterephthalate ("PET") and polybutyleneterephalate); or polyimides (such as polyetherimide, polyamideimide, polymethyl(meth)-acrylate and polyethylmethacrylate). Further polysulfones; polyphenylenesulphide; polyvinyls (such as polyvinyl-alcohol, poly-vinylacetate, ethylenevinylacetate copolymers, poly-vinylchloride, polyvinylidenechloride, copolymers of vinyl-chloride and vinylidenechloride or polyvinylidenefluoride); polyethyleneglycol; styrene-containing copolymers (such as polystyrene, polymonochlorostyrene or styreneacrylonitrile copolymers); polylactones, polyacrylonitrile; polyarylenesulphideketone, polyoxymethylene, polycarbonate, polyethers, polyetherketone, polyetherketone-ketone, polyetheretherketone, polyetherketone etherketoneketone, polyacetals, polyacrylic acid, polyurethanes, polyarylic acid, cellulose esters, polybenzimidazole and copolymers and blends of these substances may also be used. Preferably, the matrix component is selected from the group consisting of polyolefins, polyamides, polyesters, polysulfones; polyaryletherketones; polyimides; polystyrenes; polylactones; polycarbonates; and polyethers. Preferably, the matrix component is a polyamide and most preferably, nylon 6.

Suitable materials for the reinforcing component should be capable of drawing and orientation but generally all fiber forming thermoplastic materials are useful so long as the materials selected are such that the melting point of the reinforcing material is at least about 5°C above the melting point of the matrix material. Suitable reinforcing materials include, for example, polyolefins; polyamides, polyesters; polysulfones; polyaryletherketones; polyimides; polycarbonates; and polyethers. Preferably, the reinforcing component is a polyester or a polyamide like nylon 6,6 and 6,6T, and most preferably, polyethylene terephthalate.

In a preferred embodiment said matrix component is a polyamide and said reinforcing component is a polyester, whereby the polyamide preferably is nylon 6 and the polyester is polyethylene terephthalate.

In another preferred embodiment said matrix component is a polyamide and said reinforcing component is a polyamide, whereby the matrix component preferably is nylon 6 and said reinforcing component is nylon 6,6 or nylon 6,6T.

In another preferred embodiment said matrix component is a polysulfone and said reinforcing component is a polyaryletherketone, whereby the polysulfone preferably is polyethersulfone and the polyaryletherketone is polyetherketone or polyetherketoneetherketoneketone.

In another preferred embodiment said matrix component is a polyaryletherketone and said reinforcing component is a polyaryletherketone, whereby the matrix polyaryletherketone preferably is polyetheretherketone and the reinforcing polyaryletherketone is polyetherketoneetherketoneketone.

In another preferred embodiment said matrix component is a polyamide and said reinforcing component is a polyaryletherketone, whereby the polyamide preferably is nylon 6,6T and the polyaryletherketone is polyetheretherketone or polyetherketoneetherketoneketone.

In general, a variety of matrix component to reinforcing component ratios may be used. Preferably, the final composite should be between 15 and 80 percent matrix component by weight and more preferably, 40 to 70 percent matrix component by weight. Of course, it will be understood that the optimum level of matrix component will vary with the thermoplastic materials selected as well as the intended end application.

The preferred denier per filament is ½ to 40 denier per filament, with the most preferred being 3 to 15 denier per filament. The staple length may be ¼ inch to 20 inches (0.63 cm to 50.8 cm) and, most preferably, is 1 inch to 8 inches (2.5 cm to 20.3 cm).

In general, nearly any cross-section may be used to make the staple fibers useful in the present invention. The fibers may be, for example, round, delta or multilobal. Round cross-sections or cross-sections with a modification ratio below 2.3 are preferred to facilitate a dense package of fiber and to minimize the opportunity to form voids when the composite is made.

Staple spinning processes are known. In general, a typical process involves opening bales of staple fiber with an opening machine, then blending the bales together many times through a series of hoppers to increase uniformity. If different types of staple fiber are to be used, combination typically takes place during the blending step so as to mix the different types of fiber uniformly. The carding step follows blending, and creates a sliver of somewhat oriented staple fibers. Several carded slivers may then be combined and drafted on a drawframe to further improve both orientation and blend uniformity to yarn spinning.

To make the fabric, the multicomponent staple yarns are processed to form a fabric by chemical methods, mechanical methods or thermobonding methods, such as weaving, knitting, calendaring, hot air bonding, hydroentangling, needle punching, plaiting, etc. all according to known methods. Also, the fabric may be made by wrapping or braiding the yarn about a predetermined form.

Thermoplastic powders may be added to the fabric, when it is made, or one or more layers of fabric may be combined with one or more layers of sheeting or film of the same or a different thermoplastic material or of a thermosetting material depending upon the application. Additionally, fillers and conventional additives may be added to the thermoplastic materials either before they are spun to form a fabric or to the fabric or to the prepreg in the thermoforming process. These additives may be selected from, for example, pigments, fluxes or anti-blocking agents.

A preferred aspect of the present invention is a fabric useful for conversion into a fiber reinforced laminate which is produced by spinning a yarn from a matrix component staple fiber and a drawable reinforcing component continuous filament. The staple component could also be a bicomponent fiber of the reinforcing component and the matrix component. The matrix and reinforcing component are selected as described above. The fabricating may be by knitting, weaving or any other fabricating methods such as those used to make nonwovens. Suitable methods for fabricating include chemical methods, mechanical methods or thermobonding methods. Additionally, the fabric may be made by wrapping or braiding the yarn about a predetermined form.

The yarn is formed by spinning the matrix (or matrix and reinforcing) staple fiber and reinforcing continuous filaments. It is also contemplated that other types of fibers may be added to the extent permitted by the state-of-the-art now or after future developments. Also, it is contemplated that the co-spun yarns may be combined with other fibers which provide other properties. For example, carbon fibers may provide conductivity and resistance to static electricity. These "functional" filaments may be added during co-spinning or by any other method such as commingling, coweaving, coknitting, cowinding, etc.

Staple fibers and continuous filaments can be combined into a yarn by wrapping the staple fibers around the continuous filaments or by wrapping the continuous filaments around a staple core. This process is known as core spinning. Furthermore, continuous filaments and staple fibers can be combined by spinning a staple spun yarn from the staple fibers, then combining this yarn and the continuous filament yarn in a cable twisting process.

The fabrics of the present invention are particularly well suited to be stacked to form laminates which are processed as prepregs under pressure in a heated mold. This may, for instance, be an ordinary double mold or also a single mold with a vacuum bag. An advantage of the prepreg fabrics of the present invention is that they can be draped when cold. This is of particular importance in the thermoforming process when filling a mold of a complex geometry because a fabric that allows itself to be draped will conform completely to the shape of the mold.

Another embodiment of the present invention is a process for forming fiber reinforced laminates. The process involves spinning a multicomponent staple yarn (either completely staple or staple and continuous filament) as described above having a fibrous matrix thermoplastic component and a fibrous reinforcing thermoplastic component. Various arrangements of the components, such as in a multicomponent fiber, a mixed fiber yarn, or combination of multicomponent and mixed fibers are possible. The materials may be selected as described above and other functional filaments may be added either during the extruding process or later by co-winding or any of the other methods described above or contemplated in the art.

The yarn is then fabricated into a preconsolidation fabric. The fabricating may be by any of the methods described above or contemplated by those of ordinary skill in the art, such as weaving, knitting, hydro-entangling, braiding, etc.

The fabric is then shaped into a preconsolidation form such as by, for example, placing the fabric onto a mold or substrate. Next the shaped fabric is heated to at least the melting or softening point of the matrix component but not to the melting or softening point of the reinforcing component such that the matrix component melts and flows to adopt the shape of the mold or substrate.

It is contemplated and especially preferred that several layers of the fabric are placed together prior to the shaping and heating.

When processing the fabric as a prepreg, the conventional processes can be applied. Typically the fabric is heated to a temperature at which the thermoplastic fibers will melt but not yet degrade and at which the reinforcing fibers will neither melt or degrade. The thermoplastic fibers will generally be chosen from those thermoplastic materials that have a melting point above 100°C and preferably above 130°C, to ensure that the mechanical properties of the product will be adequate. In order to promote the wetting of the fibers, pressure of 1 bar to 100 bar will typically be exercised.

Since the invention used fabrics made from components which are already in intimate contact, the composites formed according to the present invention are substantially free from voids where the matrix has not wet out the reinforcement. This effect is enhanced when the components are spun uniformly such that domains of any one component are substantially avoided.

At high pressures (above 100 bar), reinforcing fibers are less inclined to form loops. The process then, however, is both more difficult and expensive. The present invention is therefore particularly suited for use at processing temperatures with average to low pressures. In vacuum bag molding techniques, it is possible to obtain a proper impregnation at differential pressures of 1 to 2 bar. The quality of the impregnation depends in part upon the viscosity of the thermoplastic material applied. For instance, in view of the viscosity of nylon 6, it is preferable to employ a pressure of from about 5 bar to about 50 bar when using this material.

Fabrics made with multicomponent staple fiber yarns according to the present invention can be used in all applications where the use of high-grade fiber reinforced plastics is advantageous. The product is particularly advantageous in those areas where it is desirable for flat sheets of fabric to be subjected to elastic cold forming to conform to the mold for the thermoforming process. Examples include the automotive industry, recreational equipment, domestic articles (e.g., boxes for microwaves), housings for electronic apparatus, satellite dishes, the aircraft industry, shipbuilding, home construction, furniture, vessels and helmets.

The invention will now be described by referring to the following detailed examples. These examples are set forth by way of illustration and are not intended to be limiting in scope.

### EXAMPLE 1

### Composite from a Knitted Fabric of a Bicomponent Staple Fiber Yarn

Bicomponent staple fibers are produced by spinning sheath/core filaments through a spinneret assembly at 290°C with the sheath comprised of nylon 6 (relative viscosity in H₂SO₄ of 2.8, measured at a concentration of 1 g of polymer per 100 ml in 96% strength by weight sulfuric acid at a temperature of 25°C, and moisture below 500 ppm) and the core comprised of polyethylene terephthalate ("PET"). The PET has an intrinsic viscosity, measured at a concentration of 1 g polymer per 100 ml in 60% by weight phenol/40% by weight tetrachloroethane at a temperature of 25°C,of 0.63 and a moisture below 80 ppm. The weight percentages of each is 23% sheath and 77% core. After leaving the spinneret, the filaments are quenched with air and drawn over heated godets to impart orientation and consequently increase strength. The filament bundle is then wound onto a package using a winder. The resulting yarn has a total denier of 1485 and a filament count of 110. The denier of each is approximately 13.5.

Twenty packages are then placed on a creel and the ends of yarn are combined together into a tow. The tow is crimped in a stuffer box crimper to yield an average of 10 crimps per inch (3.9 crimps per cm) with an amplitude of 0.05 inches (0.127 cm). The crimped tow is then cut into staple fiber using a rotating blade cutter to yield an average cut length of 2 inches (5.08 cm). The staple fibers are baled and transported to the staple spinning process.

The bales of staple fiber are opened on an opening line which breaks up the clumps of fiber removed from the bale then continuously recombines the staple fibers to improve uniformity and sufficiently open the fiber into a fluffy mass. This opened fiber is then fed into a card with a 300 rpm cylinder speed producing a carded sliver of 70 grains/yard (76.6 grains/meter) and placing the sliver in a sliver can in a coiled pattern. Eight ends of this sliver are fed into a drawframe which combines the ends and drafts them eight times at 1200 yards (1097 m) per minute to produce a drawn sliver of 70 grains/yard (76.6 grains/meter) which is placed in a sliver can. The drawn sliver is then converted to spun yarn using an open end spinning machine with a 60 mm rotor and 50,000 rotor speed. The resulting yarn has a cotton count of 6 or an approximate denier of 900.

The yarn is knitted into a tube using a circular knitter. Tension is applied to make the knit tube as dense as possible. The fabric weight of the knit tube is 900 grams/m². Four layers of knit tubes (8 plies of fabric) are stacked together and molded in a hydraulic press at 450°F (232°C) and 21 bar (300 psig) pressure for 16 minutes. The resulting composite material is approximately 23% nylon 6 matrix and 77% PET reinforcing fiber.

### EXAMPLE 2

### Composite from a Knitted Fabric of a Mixed Staple Fiber Yarn

Nylon 6 staple fibers are produced by spinning through a spinneret assembly at 270°C. The nylon 6 has a relative viscosity (measured under the same conditions given in Example 1) in H₂SO₄ of 2.8 and moisture below 500 ppm. After leaving the spinneret, the filaments are quenched with air and drawn over heated godets to impart orientation and consequently increase strength. The filament bundle is then wound onto a package using a winder. The resulting yarn has a total denier of 1485 and a filament count of 110. The denier of each is approximately 13.5.

Twenty packages are then placed on a creel and the ends of yarn are combined together into a tow. The tow is crimped in a stuffer box crimper to yield an average of 10 crimps per inch (3.9 crimes per cm) with an amplitude of 0.05 inches (0.127 cm). The crimped tow is then cut into staple fiber using a rotating blade cutter to yield an average cut length of 2 inches (5.08 cm). The nylon 6 staple fibers are baled and transported to the staple spinning process.

Polyethylene terephthalate (PET) staple fibers are produced by spinning through a spinneret assembly at 290°C. The PET has an intrinsic viscosity, measured in 60% by weight phenol/40% by weight tetrachloroethane (same conditions as in Example 1), of 0.63 and a moisture below 80 ppm. After leaving the spinneret, the filaments are quenched with air and drawn over heated godets to impart orientation and consequently increase strength. The filament bundle is then wound onto a package using a winder. The resulting yarn has a total denier of 1485 and a filament count of 110. The denier of each is approximately 13.5.

Twenty packages are then placed on a creel and the ends of yarn are combined together with a tow. The tow is crimped in a stuffer box crimper to yield an average of 10 crimps pe inch (3.9 crimps per cm) with an amplitude of 0.05 inches (0.127 cm). The crimped tow is then cut into staple fiber using a rotating blade cutter to yield an average cut length of 3 inches (7.62 cm). The PET staple fibers are baled and transported to the staple spinning process.

The bales of nylon and PET staple fiber are opened together in equal amounts (50% of each) on an opening line which breaks up the clumps of fiber removed from the bale then continuously recombines the staple fibers to improve uniformity and sufficiently open the fiber into a fluffy mass. The opened fiber is then re-fed into the opening line for two additional passes to further improve blending between the nylon and PET. This opened fiber is then fed into a card with a 300 rpm cylinder speed producing a carded sliver of 70 grains/yard (76.6 grains/meter) and placing the sliver in a sliver can in a coiled pattern.

Eight ends of this sliver are fed into a drawframe which combines the ends and drafts them eight times at 1200 yards/minute (1097 m/minute) to produce a drawn sliver of 70 grains/yard (76.6 grains/meter) which is placed in a sliver can. The drawn sliver is then converted to spun yarn using an open end spinning machine with a 60 mm rotor and 50,000 rotor speed. The resulting yarn has a cotton count of 6 or an approximate denier of 900.

The yarn is knitted into a tube using a circular knitter. Tension is applied to make the knit tube as dense as possible. The fabric weight of the knit tube is 900 grams/m². Four layers of knit tubes (8 plies of fabric) are stacked together and molded in a hydraulic press at 450°F (232°C) and 21 bar (300 psig) pressure for 16 minutes. The resulting composite material is approximately 50% nylon 6 matrix and 50% PET reinforcing fiber.

### EXAMPLE 3

### Composite from a Knitted Fabric of a Yarn Containing Continuous Filaments and Monocomponent Staple Fibers

Bales of nylon 6 staple fibers are produced by the method described in Example 2. The bales of staple fiber are opened on an opening line which breaks up the clumps of fiber removed from the bale then continuously recombines the staple fibers to improve uniformity and sufficiently open the fiber into a fluffy mass. This opened fiber is then fed into a card with a 300 rpm cylinder speed producing a carded sliver of 70 grains/yard (76.6 grains/meter) and placing the sliver in a sliver can in a coiled pattern. Eight ends of this sliver are fed into a drawframe which combines the ends and drafts them eight times at 1200 yards/minute (1097 m/minute) to produce a drawn nylon sliver of 70 grains/yard (76.6 grains/meter) which is placed in a sliver can.

Polyethylene terephthalate (PET) continuous filaments are produced by spinning through a spinneret assembly at 290°C. The PET has an intrinsic viscosity (measured in the same solvent and under the same conditions as in Example 1) of 0.63 and a moisture below 80 ppm. After leaving the spinneret, the filaments are quenched with air, drawn over heated godets to impart orientation and consequently increase strength. The filament bundle is then wound onto a package using a winder. The resulting yarn has a total denier of 1000 and a filament count of 110. The denier of each is approximately 9.

The nylon staple fibers and PET continuous filament yarn are combined in the core spinning process at 125 meters/minute running speed whereby staple fibers of nylon are wrapped onto the PET filament yarn. Five ends of nylon sliver are combined with one end of PET yarn and the drafting unit II speed is adjusted to yield a yarn with 30% nylon staple fibers and 70% PET continuous filaments by weight. The resulting yarn has a denier of 1430.

The yarn is knitted into a tube using a circular knitter. Tension is applied to make the knit tube as dense as possible. The fabric weight of the knit tube is 900 grams/m². Four layers of knit tubes (8 plies of fabric) are stacked together and molded in a hydraulic press at 450°F (232°C) and 21 bar (300 psig) pressure for 16 minutes. The resulting composite material is approximately 30% nylon 6 matrix and 70% PET reinforcing fiber.

### EXAMPLE 4

### Composite from a Knitted Fabric of a Yarn Containing Continuous Filaments and Bicomponent Staple Fibers

Bales of bicomponent staple fibers are produced by the method described in Example 1, except that a ratio of 50% sheath and 50% core is used. The staple fiber is converted to 70 grain/yard (76.6 grains/meter) drawn sliver as described in Example 1.

Polyethylene terephthalate (PET) continuous filaments are produced by the method described in Example 3.

The bicomponent staple fibers and the PET continuous filament yarn are combined in the core spinning process at 125 meters/minute running speed whereby the bicomponent staple fibers are wrapped onto the PET filament yarn. Five ends of sliver are combined with one end of PET yarn and the drafting unit II speed is adjusted to yield a yarn with 40% bicomponent staple fibers and 60% PET continuous filaments by weight. The resulting yarn has a denier of 1430.

The yarn is knitted into a tube using a circular knitter. Tension is applied to make the knit tube as dense as possible. The fabric weight of the knit tube is 900 grams/m². Four layers of knit tubes (8 plies of fabric) are stacked together and molded in a hydraulic press at 450°F (232°C) and 21 bar (300 psig) pressure for 16 minutes. The resulting composite material is approximately 20% nylon 6 matrix and 80% PET reinforcing fiber.

## Claims

1. The use of a fabric for processing into a fiber reinforced composite, said fabric comprising:
a multicomponent staple fiber yarn having a thermoplastic matrix component of a first melting point if crystalline or a first softening point if not crystalline and a drawable, fibrous thermoplastic reinforcing component of a second melting point if crystalline or a second softening point if not crystalline,
wherein said first melting or softening point is at least 5°C below said second melting or softening point.

2. The use of a fabric for conversion into a fiber reinforced laminate, the fabric being produced by the process comprising:
spinning a yarn from a matrix thermoplastic staple fiber with a first melting point if crystalline or a first softening point if not crystalline, and a drawable fibrous reinforcing thermoplastic component with a second melting point if crystalline or a second softening point if not crystalline, wherein said first melting point is at least 5° below said second melting point; and
fabricating the yarn into a fabric.

3. A process for forming fiber reinforced laminates comprising:
providing a multicomponent staple fiber yarn having a fibrous matrix thermoplastic component with a first melting point if crystalline or a first softening point if not crystalline, and a drawable fibrous reinforcing thermoplastic component with a second melting point if crystalline or a second softening point if not crystalline, wherein said first melting point is at least 5°C below said second melting point;
fabricating the yarn into a pre-consolidation fabric;
shaping the pre-consolidation fabric by conforming the fabric onto a mold or substrate; and
heating the shaped pre-consolidation fabric to the first melting or softening point but not to the second melting or softening point such that the matrix component melts and consolidates the reinforcing component.

4. The process of claim 3 wherein said providing is of a bicomponent staple fiber integrally comprised of said reinforcing component and said matrix component.

5. The process of claim 4 wherein said bicomponent fiber has a core of said reinforcing component and a sheath of said matrix component.

6. The process of claim 4 wherein said bicomponent fiber is a side-by-side bicomponent.

7. The process of claim 4 wherein said bicomponent is an islands-in-the-sea bicomponent.

8. The process of claim 3 wherein said providing is of a staple fiber having substantially no domains of any one component.

9. The process of claim 3 wherein said providing is of a matrix component selected from the group consisting of:
polyolefins; polyamides; polyesters; polysulfones; polyaryletherketones; polyimides; polystyrenes; polylactones; polycarbonates; and polyethers.

10. The process of claim 3 wherein said providing is of a reinforcing component selected from the group consisting of:
polyolefins; polyamides; polyesters; polysulfones; polyaryletherketones; polyimides; polycarbonates; and polyethers.
